# EUROPEAN PATENT SPECIFICATION

(11) **EP 1 351 882 B1**
(45) Date of publication and mention of the grant of the patent: **06.10.2004**
(21) Application number: 00991992.9
(22) Date of filing: 19.12.2000
(51) Int. Cl.: C01B 33/26, C11D 3/08

(54) **A PROCESS FOR THE MANUFACTURE OF ZEOLITE-A USEFUL AS A DETERGENT BUILDER**
VERFAHREN ZUR HERSTELLUNG VON ZUR VERWENDUNG ALS WASCHMITTELBUILDER GEEIGNETEM ZEOLITH A
PROCEDE DE FABRICATION DE ZEOLITE A UTILE EN TANT QU'ADJUVANT POUR DETERGENT

(43) Date of publication of application: 15.10.2003
(73) Proprietor: National Aluminium Company Limited, Bhubaneshwar, Orissa (IN); National Research Development Corporation of India, New Delhi - 110 048 (IN)
(72) Inventor: GANDHI, M., R., Bhavnagar (IN); SETH, M., M., Bhubaneshwar, Orissa (IN)
(74) Representative: Blumenröhr, Dietrich
(86) International application number: PCT/IN2000/000130
(87) International publication number: WO 2002/049962

(56) References cited:
- DE-A1- 2 722 535
- DATABASE WPI Week 197932, Derwent Publications Ltd., London, GB; AN 1979-58916B, XP002957550 & JP 54 081 200 A (SUMITOMO CHEM CO LTD) 28 June 1979

## Description

### FIELD OF INVENTION

This invention relates to a process for the manufacture of Zeolite-A useful as a detergent builder. In particular, this relates to a process for the manufacture of Zeolite-A powder useful as detergent builder and having a particle size distribution of 90% less than 4 µm.

### BACKGROUND OF INVENTION

Synthesis of Zeolites depend on the starting materials such as reactive aluminosilicate gels prepared by mixing sodium silicate & sodium aluminate solutions; or amorphous solids such as metakaolin, siliceous earth, coal ash etc., pH, alkali concentration, hydrothermal conditions for crystallization with autogenous pressures and degree of supersaturation of the aluminosilicate gel leading to the nucleation of zeolite crystals. Using Na₂O-Al₂O₃-SiO₂ -H₂O system, formation of gel and subsequently zeolite can be represented as under:
Na₂SiO₃ (aq.) ±NaAl (OH)₄ (aq.) ± NaOH(aq.)
[Naₐ(AlO₂)_{b}(SiO₂)_{c}. NaQH.H₂O] gel
Naₓ[(AlO₂)ₓ (SiO₂)_{y}] NH₂O ±solution

### PRIOR ART

German patent Ger. Offen 2,517,218 describes a process to prepare Zeolite-A suitable as phosphate substitute in detergent formulations, by treating NaOH solution simultaneously with waterglass solution and sodium aluminate solution, gelled during 0.5 h, added to sodium aluminate solution at 80°C, and then crystallized during 3.5 h at 93°C. The zeolite obtained was having 93 wt % particles < 10 µm and 50 wt % < 6.5 µm.

In French patent no. 2,384,716, aqueous sodium aluminate solution is cooled to below ambient temperature and aqueous sodium silicate is mixed therewith to keep the resultant solution below ambient temperature. Such a mixture was heated to 60-100°C to form gel and maintained at this temperature for 12 min. to 3 h. As claimed, the process allowed close control of particle size distribution of the product.

According to a German Patent, Ger. Offen 2,951,192 Zeolite-A having average grain size 0.9 µm, calciumibinding capacity 300 mg CaCO₃/g and 134 mg MgCO₃/g was prepared by holding a solution containing H₂O 94.14, Na₂O 3.77, SiO₂ 1.77 and Al₂O₃ 0.52 mole at 60°C for 8h.

As described in Japanese patent JP NO. 89,05,905, zeolite having fine grain size is prepared from a mixture containing solidum aluminate and silicate, by hydrothermal reaction at the following conditions:
26-60 wt % zeolite concentration in reacting solution,
14-30 wt. % alkali (as Na₂O) concentration in mother liquor,
40°C at reactant solution mixing and 30-110°C for crystallization.

In a Japanese patent JP 04,342,416 a method is described to manufacture Zeolite-A, avoiding formation of hydroxysodalite and, wherein, an aqueous solution containing 0.1-0.3 mole per litre aluminate ions and 0.05-3 mole/l sodium ions is mixed with an aqueous solution containing 0.02-0.1 mole/silicate ions and 0.05-4 mole/1, Sodium ions, at < 60°C not to form gel and the mixture is heated at 60-100°C to precipitate Zeolite-A.

A-type zeolite useful as detergent builder is effectively manufactured, without generation of other types of zeolites (HS), as described in Japanese patent JP 63,08,211. In such a patent, aqueous sodium silicate solution and aqueous sodium aluminate solution are mixed at < 60°C to give a slurry having alkali concentration (as Na₂O) > 12%, when the zeolite crystallization rate becomes > 60% as determined by electron diffraction method (I) and < 80% by XRD method (II), the alkali concentration is lowered to 1-8 % and the resulting slurry is aged at 70-110°C to complete the crystallization process to give A-type zeolite having particle size 0.3 µm and Ca ion exchange capacity 160 mgCaO/g.

Another Japanese patent JP 63,265,808 describes a process for the manufacture of A-type zeolite by (a) adding an aqueous solution of alkaline Al(OH)₃ [20-25 wt % Al(OH)₃] at 70-90°C and an aqueous solution of alkali silicate (20-29 wt % SiO₂) at < 40°C to water of < 40°C and by heating the mixture containing the resulting gel. Thus, an aqueous solution containing 45.1 Kgs 49% NaOH, and 17.7 Kgs Al(OH)₃ of 80°C and 38.3 Kgs aqueous sodium silicate (SiO₂ 28-30 wt %) solution of 30°C were added to 59.9 Kgs water of 30°C, stirred 30 min. at 150 rpm, heated to 100°C for 2h, cooled to 40°C, filtered, washed and dried at 100-110°C for 3h to give Zeolite-A

British Patent Application No. 2,005,653 describes a method to manufacture zeolite useful for Ca exchange without amorphous or crystalline impurities by the hydrothermal crystallization of a completely dispersed aluminosilicate gel by combining solutions of silica, alumina and alkali. In an example of the aforesaid patent application, sodium aluminate solution containing 59.3% solids (Na₂O-Al₂O₃ molar ratio 1.2) is prepared by dissolving Al₂O₃ hydrate in hot NaOH, and sodium-silicate solution containig 47% solids (SiO₂:Na₂O::2.4: 1) were heated to 72°C, diluted and mixed for 7 minutes in a homogenizer to produce a dispersed gel with no visible particles and viscosity 110 cps at 60°C. Zeolite-A seed material was added and the gel was heated for 80 minutes at 100°C. The crystalline Zeolite-A was separated, washed, dried for 5h at 105°C to give an uncontaminated material with Ca-exchange capacity 289 mg CaCO₃/g.

The drawbacks associated with the above mentioned known processes are:
i) Complex unit operations such as simultaneous addition of reacting solutions, maintaining the temperature of reactants and/or reaction mixture above or below ambient temperature, are involved in the preparation method.
ii) Gel formation at 60-110°C or below ambient temperature makes the preparation method energy consuming which adds to the production cost.
iii) Aging of gel, dispersing gel using homogenizer, prolonged crystallization time, hydrothermal conditions for crystallization etc. also contribute to make the process uneconomical.
iv) Precise pH control is required to obtain zeolite of uniform and small grain size.
v) Dilute solutions are used which is not favourable for large scale production of Zeolite-A
vi) Lowering the alkali concentration during the process and monitoring by sophisticated instruments (e.g. electron diffraction & XRD) is a tedious job. Even it requires much more time to obtain the product.
vii) Preparation of sodium-aluminate solution by dissolving Al₂O₃ hydrate in hot NaOH solution add to the production cost.
viii) High energy inputs are involved for the preparation a alumino silicate gel, since the raw material sodium aluminate powder has utilized more energy as compared to sodium aluminate liquor from which it was prepared. The gel of ambient temperature also requires more energy to achieve the crystallization temperature of more than 90°C.

French patent no. CA 1142501 describes a semi continuous method for production of Zeolite A. Though such a patent recognizes that the zeolite should have an average particle distribution size of 2 to 3 microns for use as a builder in detergents, the examples contained therein reflect that 98% of the average particle distribution size obtained by the process of the aforesaid patent is between 7 to 15 µm. Furthermore, the examples of the aforesaid patent reflect that a decomposed solution or Bayers liquor having low alumina content is employed as the starting material. Thus, such a patent employs a lean liquor after removal of alumina trihydroxide, namely a liquor which is unsaturated with respect to Al₂O₃. A disadvantage in the use of a lean liquor is that it introduces complexity in the process. In order to obviate such a disadvantage, the patent teaches the additional step of adding more Al₂O₃, which is then heated at a temperature of 100°C. Further, the aforesaid patent uses a liquor containing an excess of silica.

### OBJECTS OF THE INVENTION

An object of the present invention is to propose an improved process for the manufacture of Zeolite-A useful as a detergent builder.

Another object of the present invention is to propose a process for the manufacture of zeolite-A having an average particle size distribution not exceeding 4 µm.

### DESCRIPITON OF THE INVENTION

According to this invention there is provided a process for the manufacture of Zeolite-A useful as a detergent builder, which comprises:
i) dilution of sodium aluminate liquor obtained as a pregnant liquor from Bayers process and having a concentration of at least 140 g/l of alumina therein and adjusting Al₂O₃-Na₂O molar ratio to 0.5± 0.01,
ii) thoroughly mixing alkali, water and sodium silicate to obtain a mixture with molar ratios SiO₂-Na₂O in the range of 1.25-1.66 and H₂O-Na₂O in the range of 35-45.
iii) dosing hot sodium aluminate solution at a temperature in the range of 50-60°C to the sodium silicate solution at ambient temperature with continuous mixing to obtain a synthesis mixture/crystallization bath having molar ratios :SiO₂-Al₂O₃ in the range of 1.6-2.0, NazO-SiO₂ in the range of 1.6-2.0, HzO-Na₂O in the range of 30-40.
iv) heating the crystalisation bath at a temperature in the range of ambient to 95°C for a period in the range of 45 to 75 minutes under continuous stirring.
v) recovering Zeolite-A by filtration and washing followed by drying & pulverising.

In the present invention, sodium aluminate liquor (Bauxite leachate) is used as received from the Bauxite leaching plant, to react with sodium silicate solution to form aluminosilicate gel which is subjected to crystallization to obtain Zeolite-A (detergent builder) powder with the composition 1.0 ± 0.2 Na₂O : Al₂O₃ 1.8 ± 0.2 SiO₂ : Y H₂O (Y=upto 5) with 100 wt % particles below 20 µm, 90 wt % particles in the range 1-5 µm. Average particle size d₅₀ (sedigraph) maximum 4 µm and calcium binding capacity of minimum 160 mg CaO/g absolute dry zeolite.

Specification of Sodium Aluminate liquor (Bauxite leachate) - an intermediate stream of alumina refinery used in the present invention is given in Table 1 below:

**TABLE 1**

| | |
|---|---|
| Na₂O, (Total) g/l | 165-175 |
| Na₂O, (Caustic) g/l | 146-152 |
| Al₂O₃ g/l | 142-160 |
| Carbonate [% of Na₂O (Total)] | 12- 16 |
| SiO₂, ppm | 800-1000 |
| Fe₂O₃ (Total), ppm | 8-12 |
| Fe₂O₃ (Soluble), ppm | 3-6 |
| Solid Content, ppm | 20-40 |
| Organic Carbon (% of Na₂O-Total) | 2-2.5 |
| Chloride (% of Na₂O-Total) | 0.40-0.65 |

Specifically, the sodium aluminate liquor employed in the process of the present invention is a pregnant liquor obtained from the Bayers process and having a concentation of at least 140 g/l of alumina therein. Preferably, such a liquor has a concentration of 150 to 160g/l of alumina.

Several distinct advantages are derived by the use of pregnant liquor in distinction to a decomposed solution of Bayers liquor. One such advantage is a reduction in reaction time, eliminating aging of gel as well as heat energy during gel preparation and crystallization of Zeolite-A powder from superalkaline crystallization bath consisting of aluminosilicate gel. This method avoids the use of closed hydrothermal system and homogenizer for dispersion of gel. The mother liquor/filtrate of the product contains mainly alkali, which can be recycled for Bauxite leaching or for the preparation of reactant solutions.

The sodium aluminate liquor may be diluted to adjust the Al₂O₃-Na₂O molar ratio to 0.5 ± 0.01% by adding water and alkali hydroxide such as caustic soda, caustic lye. It has been found that a deviation in such a ratio does have a detrimental effect on the properties of Zeolite A. The purpose of the present process is to provide crystalline zeolite without any grit. Thus, if such a ratio is 0.3, then Na₂O is present in excess and Al₂O₃ is less in the gel. In such an instance, free silica is present, which may trigger off the precipitation of silica aluminute. Thus, another critical factor is the Al₂O₃-SiO₂ ratio. If the ratio of Al₂O₃-Na₂O is higher than 0.5, an excess of alumina and less Na₂O and results in the formation of grits.

The sodium silicate solution may be prepared by mixing water, alkali such as caustic soda or caustic lye and sodium silicate.

The Zeolite-A (detergent builder) may be crystallized by maintaining the temperature of crystallization bath from above 90°C to about 95°C.

The washing may be carried out till the pH of the filtrate is around 11.

The drying may be carried out at least for 6 h at 110°C in air dryer.

The process of the present invention is illustrated by the following examples which should not be construed to limit the scope of the present invention.

### EXAMPLE 1

a) 300.7 L of sodium aluminate liquor (Na₂O=168.18g/l, Al₂O₃=169.6 g/l,), 14.74 Kgs of NaOH flakes and 199.3 L of water are mixed in a stirred tank, equipped with steam jacket/heating coil. The solution so prepared is heated to 50-60°C to simulate the conditions of temperature of sodium aluminate solution prepared using sodium aluminate liquor (Bauxite leachate) available in alumina refinery.
b) 155.25 Kgs sodium silicate (34.79 % SiO₂, 14.24 % Na₂O, SiO₂/Na₂O mole ratio 2.4), 19.48 Kgs of NaOH flakes and 355 of L water are mixed in a tank equipped with stirrer and stirred for 15 minutes.
c) Solution prepared in (a) is added to solution (b) within 1.5 h at ambient temperature with constant stirring to form aluminosilicate gel having molar ratios SiO₂-Al₂O₃ 1.8 ± 0.2, Na₂O-SiO₂ 1.6-2.0, HaO-Na₂O 30-40.
d) The aluminosilicate gel thus prepared is heated from ambient temperature to 93 ± 2°C in the same vessel as in © and the same temperature is maintained for 1 h under continuous stirring.
e) The Zeolite-A powder produced in (d) is filtered using plate and frame type filter press.
f) 560 L filtrate obtained in (e) contains 8242 gpl Na₂O and less then 2 gpl SiO₂ & Al ₂O₃. This filtrate can be recycled in alumina refinery for Bauxite leaching process or can be partially used in preparation of reactant solutions.
g) The cake is washed with water till the pH of the wash water is around 11.
h) The product is dried in a cabinet type tray dryer at 110°C for about 6 h. The dried powder is pulverised and passed through 300 mesh BSS.

The product Zeolite-A (detergent builder) powder obtained was grit free having following specifications:

| | | |
|---|---|---|
| 1. | Calcium binding capacity | 171 mg CaO/g |
| 2. | Loss on ignition (800°C, 1h) | 21.69% |
| 3. | Particle size analysis; | |
| | % finer than 4.5 µm | 90% |
| | Average particle size, dso (sendigraph) | 2.9 µm |
| 4. | Crystallinity, (XRD as compared to 4A BDH powder) | 100% |
| 5. | Whiteness index | 97.3% |
| 6. | Chemical Composition: | |
| | SiO₂ | 33.10% |
| | Al₂O₃ | 29.62% |
| | Na₂O | 15.59% |
| | H₂O | 21, 69% |
| 7. | Mole composition | 0.87 Na₂O: Al₂O₃: |
| 8. | pH (5 % aq. Suspension) | 1.90 SiO₂: 4.2 H₂O 11.0 |

### EXAMPLE 2

a) 5.8 L of sodium aluminate liquor (Na₂O=182.0 gpl, Al₂O₃=176 gpl), 0.240 Kg NaOH flakes and 4.1 L water are mixed in a vessel to obtain 10 L of sodium aluminate solution having Na₂O- Al₂O₃ molar ratio 2.0. Heated to 60°C before adding to sodium silicate solution.
b) 3.075 Kgs sodium silicate (SiO₂ 35.12 % Na₂O=14.69 % & H₂O=50.19%) 0.367 Kgs NaOH flakes, and 7.1 L water are mixed in a vessel for 15 minutes.
c) Sodium aluminate solution as prepared in (a) is added to sodium silicate solution prepared as in (b) within 1.5 h at ambient temperature with constant stirring to form aluminosilicate gel having molar ratios SiO₂-Al₂O₃ 1.8 ± 0.2, Na₂O- SiO₂ 1.6-2.0, H₂O- Na₂O 30-40.
d) The gel thus formed was heated upto 93±2°C in the same vessel as prepared in © and the temperature maintained for 1 h under continuous stirring.
e) The Zeolite-A powder product in (d) is obtained as described in example 1.
f) 12.0 L filtrate obtained containing 85.63 gpl Na₂O and less than 2 gpl SiO₂ & Al₂O₃.

The product obtained according to example 2 was having following specifications.

| | | |
|---|---|---|
| 1. | Calcium binding capacity | 175 mg CaO/g |
| 2. | Loss on ignition (800°C, 1h) | 22.03% |
| 3. | Particle size analysis | |
| | % finer than 4.5 µm | 88% |
| | Average particle size, d₅₀ sendigraph) | 3.1 µm |
| 4. | Crystallinity, (XRD as compared to 4A BDH powder) | 100% |
| 5. | Whiteness index | Not Determined |
| 6. | Chemical Composition: | |
| | SiO₂ | 32.50% |
| | Al₂O₃ | 30.16% |
| | Na₂O | 15.31% |
| | H₂O | 22.03% |
| 7. | Mole composition | 0.84 Na₂O: Al₂O₃ : 1.83 SiO₂: 4.14 H₂O |
| 8. | | 11.0 |

### EXAMPLE 3

a) 124.5 L sodium aluminate liquor (Na₂O=187.4 gpl & Al₂O₃=174.15 gpl), 3.9 Kgs NaOH flakes, 85.0 litres water are mixed to obtain 212.5 lits of sodium aluminate solution having 124 gpl Na₂O & 102 Al₂O₃. The solution is heated to 60°C prior to mixing with sodium silicate solution.
b) 66.5 Kgs sodium silicate (34.53 % SiO₂, 14.85 % Na₂O and 50.62 % H₂O), 7.664 Kgs NaOH flakes and 150.2 L water are mixed to obtain sodium silicate solution.
c) Solution prepared in (a) is added to solution prepared in (b) within 90 minutes at ambient temperature so as to obtain a gel suitable to manufacture Zeolite-A (detergent builder).
d) The gel is heated to 93 ± 2°C and maintained at this remperature for 1 h under continuous stirring.
e) The procedures followed thereafter are similar to those described in earlier examples. Zeolite-A powder obtained according to this example was having following properties.

| | | |
|---|---|---|
| 1. | Calcium binding capacity | 173 mg CaO/g |
| 2. | Loss on ignition (800°C, 1h) | 21.70% |
| 3 | Particle size analysis | |
| | % finer than 4.5 µm | 87% |
| | Average particle size, d₅₀ (sendigraph) | 3.2 µm |
| 4. | Crystallinity, (XRD as compared to 4A BDH powder) | 100% |
| 5. | Whiteness index | 96.8% |
| 6, | Chemical Composition: | |
| | SiO₂ | 33.39% |
| | Al₂O₃ | 28.75% |
| | Na₂O | 16.16% |
| | H₂O | 21.70% |
| 7. | Mole composition | 0.92 Na₂O: Al₂O₃ : 1.97 SiO₂: 4.3 H₂O |
| 8. | pH (5 % aq. Suspension) | 11.1 |

Specifications of Zeolite-A (detergent builder) produced by the process of the present invention are given in Table 2:

**TABLE 2**

| | | |
|---|---|---|
| 1. | Calcium binding capacity | Min. 160 mg CaO/g |
| 2. | Loss on ignition (800°C, 1h) | Min. 20% |
| 3. | Particle size analysis: | |
| | % finer than 4.5 µm | 90± 10%, |
| | Average particle size, d₅₀ (sendigraph) | < 4 µm |
| 4. | Crystallinity, ( as compared to 4A BDH powder by XRD) | Min. 95 % |
| 5. | Whiteness index | Min. 95 % |
| 6. | Chemical Composition: | |
| | SiO₂ | 32-34% |
| | Al₂O₃ | 28-30% |
| | Na₂O | 14-16% |
| | H₂O | 20-22% |
| 7. | Mole composition | 1.0 ± 0.2 Na₂O: Al₂O₃ : 1.8 ± 0.2 SiO₂: YH₂O Y=Upto 5 |
| 8. | pH (5 % aq. Suspension) | 10-12 |

Zeolite-A powder produced by the present invention is free of gril particles (i.e. particles > 45 µm) having narrow particle size distribution (90% particles between 1-5 µm), average particle size d₅₀, sendigraph) < 4.0 µm and has special properties required for the potential application as detergent builder to replace phosphates in detergent formulations.
The present invention has the following advantages.
1. An intermediate stream of alumina refinery as received from Bauxite leaching plant containing many impurities (see Table 2) has been used as source of alumina and alkali. This makes the final product cheaper as no extra processing is required for the preparation of sodium aluminate soluton.
2. The unit operations involved in the process are so simple that it reduces the plant machinery cost and smooth production is possible.
3. The byproduct obtained in this process, i.e. filtrate, contains mainly alkali, which can be reutilised in Bauxite leaching or in the preparation of reactant solution. Thus making the process eco-friendly.
4. Even wash water which is slightly alkaline can be reused for the preparation of reactant solutions.
5. The process does not require any precise pH control or monitoring the crystallization by using sophisticated instruments. The only precise control required is that of temperature during crystallization.

## Claims

1. A process for the manufacture of Zeolite-A useful as a detergent builder, which comprises:
i) dilution of sodium aluminate liquor obtained as a pregnant liquor from Bayers process and having a concentration of at 1 east 140 g/l of alumina therein and adjusting Al₂O₃-Na₂O molar ratio to 0.5± 0.01,
ii) thoroughly mixing alkali, water and sodium silicate to obtain a mixture with molar ratios SiO₂-Na₂O in the range of 1.25-1.66 and H₂O-Na₂O in the range of 35-45.
iii) dosing hot sodium aluminate solution at a temperature in the range of 50-60°C to the sodium silicate solution at ambient temperature with continuous mixing to obtain a synthesis mixture/crystallization bath having molar ratios :SiO₂-Al₂O₃ in the range of 1.6-2.0, Na₂O-SiO₂ in the range of 1.6-2.0, H₂O-Na₂O in the range of 30-40.
iv) heating the crystalisation bath at a temperature in the range of ambient to 95°C for a period in the range of 45 to 75 minutes under continuous stirring.
v) recovering Zeolite-A by filtration and washing followed by drying & pulverising.

2. A process as claimed in claim 1 wherein said sodium aluminate liquor used is an intermediate stream from Bauxite leaching plant of alumina refinery.

3. A process as claimed in claims 1 to 2 wherein the dosing time is in the range of 60 to 120 minutes.

4. A process as claimed in claims 1 to 3 wherein the Zeolite-A (detergent builder) is crystallized by maintaining the temperature of crystallization bath from above 90°C to about 95°C.

5. A process as claimed in claims 1 to 4 wherein the washing is carried out till the pH of the filtrate is around 11.

6. A process as claimed in claims 1 to 5 wherein the drying is carried out at least for 6 h at 110°C in air dryer.

## Patentansprüche

1. Verfahren zur Herstellung von Zeolith-A, das als Waschmittel-Gerüststoff geeignet ist, umfassend:
1) Verdünnen einer Natriumaluminatlauge, die als Frischlauge aus dem Bayer-Prozess erhalten wird und eine Konzentration von mindestens 140 g/l Aluminiumoxid aufweist, und Einstellen des Al₂O₃-Na₂O-Molverhältnisses auf 0,5 ± 0,01.
II) gründliches Mischen von Alkali, Wasser und Natriumsilicat, um eine Mischung mit Molverhältnissen von SiO₂-Na₂O im Bereich von 1,25 bis 1,66 und H₂O-Na₂O im Bereich von 35 bis 45 zu erhalten.
III) Dosieren der heißen Natriumaluminatlösung bei einer Temperatur im Bereich von 50 bis 60 °C zu der Natriumsilicatlösung bei Umgebungstemperatur unter kontinuierlichem Mischen, um eine Synthesemischung/ein Kristallisierungsbad zu erhalten, mit Molverhältnissen von SiO₂-Al₂O₃ im Bereich von 1,6 bis 2,0, Na₂O-SiO₂ im Bereich von 1,6 bis 2,0 und H₂O-Na₂O im Bereich von 30 bis 40.
IV) Erwärmen des Kristallisierungsbades bei einer Temperatur im Bereich von Umgebungstemperatur auf 95 °C über einen Zeitraum im Bereich von 45 bis 75 Minuten unter kontinuierlichem Rühren.
V) Gewinnen von Zeolith-A durch Filtration und Waschen, gefolgt von Trocknen und Pulverisieren.

2. Verfahren nach Anspruch 1, wobei die verwendete Natriumaluminatlauge ein Zwischenproduktstrom von einer Bauxit-Leaching-Anlage einer Aluminiumoxid-Raffinerie ist.

3. Verfahren nach einem der Ansprüche 1 bis 2, wobei die Dosierungsperiode im Bereich von 60 bis 120 Minuten liegt.

4. Verfahren nach einem der Ansprüche 1 bis 3, wobei Zeolith-A (Waschmittel-Gerüststoff) durch Aufrechterhalten der Temperatur des Kristallisierungsbades von über 90 °C. bis etwa 95°C kristallisiert wird.

5. Verfahren nach einem der Ansprüche 1 bis 4, wobei der Waschschritt ausgeführt wird, bis der pH-Wert des Filtrats etwa 11 beträgt.

6. Verfahren nach einem der Ansprüche 1 bis 5, wobei die Trocknung wenigstens 6 h bei 110°C in einem Lufttrockner ausgeführt wird.

## Revendications

1. Procédé pour la fabrication d'une Zéolite-A utile en tant qu'adjuvant de détergent qui comprend :
i) la dilution d'une liqueur d'aluminate de sodium obtenue sous forme d'une liqueur mère issue d'un procédé Bayer et ayant en elle une concentration d'au moins 140 g/l d'alumine et un ajustement du rapport molaire Al₂O₃-Na₂O à 0,5±0,01,
ii) le mélange poussé d'un alcalin, d'eau et de silicate de sodium afin d'obtenir un mélange avec des rapports molaires SiO₂-Na₂O dans l'intervalle de 1,25 à 1,66 et H₂O-Na₂O dans l'intervalle de 35 à 45,
iii) le dosage d'une solution d'aluminate de sodium chaude à une température dans l'intervalle de 50°C à 60°C dans la solution de silicate de sodium à température ambiante avec un mélange continu afin d'obtenir un mélange de synthèse/bain de cristallisation ayant des rapports molaires : SiO₂-Al₂O₃ dans l'intervalle de 1,6 à 2,0, Na₂O-SiO₂ dans l'intervalle de 1,6 à 2,0, H₂O-Na₂O dans l'intervalle de 30 à 40,
iv) le chauffage du bain de cristallisation à une température dans l'intervalle de la température ambiante jusqu'à 95°C pendant une durée dans l'intervalle de 45 à 75 minutes sous agitation continue,
v) la récupération de la Zéolite-A par filtration et un lavage suivi par un séchage et une pulvérisation.

2. Procédé selon la revendication 1 dans lequel ladite liqueur d'aluminate de sodium utilisée est un flux intermédiaire d'une installation d'extraction de Bauxite d'une raffinerie d'alumine.

3. Procédé selon la revendication 1 ou 2 dans lequel le temps de dosage est dans l'intervalle de 60 à 120 minutes.

4. Procédé selon les revendications 1 à 3 dans lequel la Zéolite-A (adjuvant de détergent) est cristallisée en maintenant la température du bain de cristallisation entre au-dessus de 90°C et environ 95°C.

5. Procédé selon les revendications 1 à 4 dans lequel le lavage est effectué jusqu'à ce que le pH du filtrat soit autour de 11.

6. Procédé selon les revendications 1 à 5 dans lequel le séchage est effectué au moins pendant 6 heures à 110°C dans un séchoir à air.
